# EUROPEAN PATENT APPLICATION

(11) **EP 4 645 627 A1**
(43) Date of publication of application: **05.11.2025**
(21) Application number: 24173196.7
(22) Date of filing: 29.04.2024
(51) Int. Cl.: H02J 3/38, H02J 3/12, H02J 3/36, H01F 30/12, H02M 5/14

(54) **IMPROVEMENTS RELATING TO CONNECTING TRANSFORMERS IN PARALLEL IN POWER TRANSMISSION NETWORKS**

(71) Applicant: GE Vernova Technology GmbH, 5400 Baden (CH)
(72) Inventor: Kumar, Amit, ST16 1WS Stafford (GB); O'heidhin, Gearoid, ST16 1WS Stafford (GB); Fonteyne, Damien, ST16 1WS Stafford (GB); Singhal, Sameer, ST16 1WS Stafford (GB)
(74) Representative: Openshaw & Co.

(57) **Abstract**

There is provided an electrical arrangement (400) for a power transmission network, comprising first and second transformers (410, 420) of the star-delta type, each having respective primary (412, 422) and secondary (414, 424) winding sides. The primary winding side (412, 422) of each transformer (410, 420) comprises three AC electrical connections (Y1, Y2, Y3, Y1', Y2', Y3'). The secondary winding side (414, 424) of each transformer (410, 420) comprises three AC electrical connections (d1, d2, d3, d1', d2', d3'). The transformers (410, 420) are arranged such that AC electrical connections (Y3, d3) of the first transformer (410) that are spatially adjacent AC electrical connections (Y1', d1') of the second transformer (420) are connected together. Remaining AC electrical connections (Y1, Y2, Y2', Y3', d1, d2, d2', d3') are connected so as to allow the first transformer (410) and second transformer (420) to have the same phase relationship.

## Description

### Field

The subject matter herein relates generally to the field of power transmission networks and more specifically to connecting transformers in parallel in power transmission networks.

### Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometer of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e., power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

Typically, for offshore/onshore power transmission schemes, an electrical arrangement comprising two three-phase transformers connected in parallel is used to transform the AC voltages before/after DC conversion and transmission. The use of two parallel-connected transformers provides for redundancy and improved application for high power transmission networks. The two parallel-connected transformers for voltage source converter (VSC) HVDC power transmission networks are typically configured in a star-delta configuration.

### Summary

When connecting transformers in parallel it can be important to ensure that the phase relationship (i.e., phase vector/phase relationship between the primary and secondary winding connections) for both transformers is the same. This tends to avoid circulating electrical currents. Electrical configurations comprising identical transformers (i.e., those having the same phase relationship between the primary and secondary winding connections) often have a plurality of electrical connection crossover points where - in order to provide the connection between the transformers and to an AC network - bus work (i.e., busbars) resultantly overlap spatially. These electrical crossovers are problematic from a design perspective because overlapping bus works must be properly insulated from each other, typically requiring a height separation (such as found in high voltage Air Insulated Substations (AIS)). Indeed, this required height separation can be 6-7m for 500kV power transmission applications. Thus, a plurality of electrical crossovers tends to increase the footprint and volume of the electrical arrangement substantially, further necessitating additional materials (i.e., bus work and insulators) contributing to an increased overall cost. Related is that the additional height at crossover points contributes additional risk to maintenance procedures, such as the safety of maintenance workers when working at height.

Migrating to an electrical arrangement comprising two transformers having a non-identical phase relationship is an option that can lead to a reduction in the design complexity (particularly the number of electrical crossovers). However, the use of two non-identical transformers imposes additional through-life challenges such as higher design/manufacturing costs (i.e., two transformer designs are required), higher testing costs (two different transformer designs are to be tested), a more complex spares management strategy (i.e., two sets of different spares can be required), and increased overall engineering costs (i.e., two sets of documentation and manuals tend to be required).

Hence it is desirable to provide an electrical arrangement for connecting transformers in parallel that mitigates these issues. More specifically, it is desirable to achieve an electrical arrangement comprising two transformers having the same phase relationship between their primary and secondary winding sides (i.e., the same transformer type) whilst at the same time achieving a parallel connection of the two transformers that optimizes the overall design footprint, volume, weight, design cost and material cost.

According to a first aspect, there is provided an electrical arrangement for a power transmission network, comprising: a first transformer for transforming AC power, the first transformer electrically connected in parallel with an adjacent second transformer for transforming AC power, each of the transformers having a respective primary winding side and a respective secondary winding side, the transformers being star-delta transformers and having the same phase relationship between their respective primary and secondary winding sides; wherein the primary winding side of each of the first and second transformers comprises a first AC electrical connection, a second AC electrical connection and a third AC electrical connection, wherein the second AC electrical connection is spatially disposed between the first and third AC electrical connections in a first direction; wherein the secondary winding side of each of the first and second transformers comprises a fourth AC electrical connection, a fifth AC electrical connection and a sixth AC electrical connection, wherein the fifth AC electrical connection is spatially disposed between the fourth and sixth AC electrical connections in the first direction; wherein the first transformer and second transformer are arranged such that, in the first direction, the third AC electrical connection of the first transformer is spatially adjacent the first AC electrical connection of the second transformer, and the sixth AC electrical connection of the first transformer is spatially adjacent the fourth AC electrical connection of the second transformer; wherein: the first AC electrical connection of the first transformer and the second AC electrical connection of the second transformer are electrically connected to each other and are for connection to a first AC phase of a first AC network, the second AC electrical connection of the first transformer and third AC electrical connection of the second transformer are electrically connected to each other and are for connection to a second phase of the first AC network, and the third AC electrical connection of the first transformer and the first AC electrical connection of the second transformer are electrically connected to each other and are for connection to a third AC phase of a first AC network; and/or the fourth AC electrical connection of the first transformer and the fifth AC electrical connection of the second transformer are electrically connected to each other and are for connection to a first AC phase of a second AC network, the fifth AC electrical connection of the first transformer and the sixth AC electrical connection of the second transformer are electrically connected to each other and are for connection to a second AC phase of the second AC network, and the sixth AC electrical connection of the first transformer and the fourth AC electrical connection of the second transformer are electrically connected to each other and are for connection to a third AC phase of the second AC network.

The connection of two transformers in parallel in a power transmission network (such as an offshore or onshore interconnection scheme) tends to provide a redundancy in the design of the power transmission scheme and provides a simpler to design, manufacture and transport transformer for high-power transmission schemes.

By providing two transformers that are star-delta transformers having the same phase relationship between their primary and secondary winding sides (i.e., providing star-delta transformers that are the same/identical), circulating electrical currents between the transformers tends to be avoided. Furthermore, the design, testing and spares cost for the transformers tends to be optimised (i.e., the same design, testing and spares can be used for both of the transformers), as well as the overall documentation and manuals requirement tends to be reduced.

Typically it is required to have a complex set of electrical connections between identical parallel connected transformers. This tends to lead to a relatively large number of electrical connection crossover points, where bus work or similar connecting means providing electrical connections between the transformers spatially overlap with each other. The requirement to provide adequate insulation and separation of the crossing-over bus work tends to increase the footprint, volume and cost of the electrical arrangement, of the air-insulated substation (AIS) comprising the electrical arrangement, and hence of the power transmission network. As previously noted herein, for HVDC applications using operating voltages of 500kV the height separation between bus bars at crossover points tends to be 6-7m.

By providing the electrical arrangement as specified by the first aspect, the parallel connection arrangement of the first and second transformers tends to be simplified to optimise the overall footprint and volume. For example, a reduction in the number of crossovers tends to mitigate the need for additional height owing to the separation requirement (insulation requirements) between bus work/busbars. Furthermore, less material tends to be required (i.e., less bus work/busbar material and insulators) further reducing costs. Furthermore, the requirement for maintenance staff to work at risk at height tends to be reduced.

Furthermore, electrical connections of the first and second transformers that are physically adjacent to each other are connected together, which tends to save a significant amount of space when connecting transformers in parallel.

As referred to herein, the first, second and third electrical phases are electrical phases of polyphase AC power, i.e., collectively are a three-phase AC power. As an example, the first phase may be referred to as `phase A', the second phase as `phase B' and the third phase as `phase C'. Alternatively, the first phase may be referred to as `phase C', the second phase as `phase A' and the third phase as `phase B'. Alternatively, the first phase may be referred to as `phase B', the second phase as `phase C' and the third phase as `phase A'.

The first AC phase of the first AC network may be the same electrical phase as the first AC phase of the second AC network. The second AC phase of the first AC network may be the same electrical phase as the second AC phase of the second AC network. The third AC phase of the first AC network may be the same electrical phase as the third AC phase of the second AC network.

A primary winding side may be referred to herein as a primary winding or first winding side. The secondary winding side may be referred to herein as a secondary winding or second-winding side. The first, second and third AC electrical connections may be referred to herein as Y1, Y2 and Y3 respectively or Y1', Y2' and Y3' respectively. The fourth, fifth and sixth AC electrical connections may be referred to herein as d1, d2 and d3 respectively or d1', d2' and d3' respectively.

In a star-delta transformer, the three-phases of the primary winding are connected in a star manner, whilst the three-phases of the secondary winding are connected in a delta manner. Such a transformer would be well-known to a person skilled in the art. The `phase relationship' between the primary and secondary winding sides may be referred to herein as the `phase vector' or `vector group' or `phase group'. For star-delta transformers there are various phase relationships denoted 'Yd11', `Yd7', `Yd5' or `Yd1', as non-limiting examples. Various other examples would be familiar to the person skilled ion the art. For the purposes of the present disclosure, the first and second transformers have the same phase relationship i.e., they are both either of the `Yd1' type, `Yd7' type, `Yd5' type or 'Yd11' type, or other Yd type.

The electrical connections are electrical connections to the respective primary or secondary windings. The electrical connections may be connected together using bus work i.e., busbars or similar.

The first AC electrical connection of the first transformer and the second AC electrical connection of the second transformer may be electrically connected to each other and to the first AC phase of the first AC network, the second AC electrical connection of the first transformer and third AC electrical connection of the second transformer may be electrically connected to each other and to the second phase of the first AC network, and the third AC electrical connection of the first transformer and the first AC electrical connection of the second transformer may be electrically connected to each other and to the third AC phase of a first AC network.

The first and second transformers may be connected in parallel only on their primary winding sides for connection to a common AC network (i.e., a common source/target of AC power). In such examples, the first and second transformers may not be connected in parallel on the secondary winding side.

The fourth AC electrical connection of the first transformer and the fifth AC electrical connection of the second transformer may be electrically connected to each other and to the first AC phase of the second AC network, the fifth AC electrical connection of the first transformer and the sixth AC electrical connection of the second transformer may be electrically connected to each other and to the second AC phase of the second AC network, and the sixth AC electrical connection of the first transformer and the fourth AC electrical connection of the second transformer may be electrically connected to each other and to the third AC phase of the second AC network.

The first and second transformers may be connected in parallel only on their secondary winding sides for connection to a common AC network (i.e., a common source/target of AC power). In such examples the first and second transformers may not be connected in parallel on the primary winding side. Alternatively, the first and second transformers may be connected in parallel on both the primary winding sides and secondary winding sides.

The first, second, and third AC electrical connections of the first transformer may be electrically connected to first, second and third phases of a third AC network. The first, second and third AC electrical connections of the second transformer may be electrically connected to third, first and second phases of a fourth AC network.

The first and second transformers may be connected in parallel only on their secondary winding sides. In such examples, the first and second transformers may be connected to different AC networks on their primary winding sides (and hence to different sources/targets of AC power). However, the same phase relationship between the primary and secondary winding sides of the respective transformers tends to be maintained. Put differently, the phase relationship on the parallel connected side is maintained on the non-parallel connected side of the transformers. An example of such an arrangement tends to be where the primary winding side of the first transformer is connected to a different offshore AC network to that of the primary winding side of the second transformer, but both first and second transformers are connected in parallel to a common power converter on their secondary winding sides.

The third AC network may comprise an offshore or onshore AC network.

The fourth AC network may comprise an offshore or onshore AC network.

The first AC network may comprise an offshore or onshore AC network.

Offshore and onshore interconnection schemes generally utilise two three-phase transformers in a parallel connected manner.

The AC networks disclosed herein (first, second, third, or fourth AC network) are sources or targets or AC power. They may comprise AC buses or AC power generation networks, or AC:DC power converters, for instance. By way of example, the second AC network may comprise a power converter. The electrical arrangement described herein tends to allow for the successful operation of one or more power converters (i.e., AC:DC power converters) .

According to a second aspect, there is provided a substation comprising the electrical arrangement of the first aspect, wherein the substation comprises an air-insulated substation (AIS), or a gas-insulated substation, GIS.

An air-insulated substation tends to function to transform high voltage electrical power from power transmission lines to a voltage that can be distributed through power distribution lines. An air-insulated substation may also be referred to as an outdoor substation and tends to have the relevant bus bars, switchgear components and switchyard equipment installed outside.

According to a third aspect, there is provided a power transmission network comprising the electrical arrangement of the first aspect.

The power transmission network may be a high voltage direct current (HVDC) power transmission network.

The power transmission network may be configured to operate at a DC voltage lower than, greater than or equal to 500kV. Alternatively, the power transmission network may be configured to operate at a DC voltage lower than or equal to 500kV.

According to a fourth aspect, there is provided a method of electrically connecting a first transformer for transforming AC power in parallel with an adjacent second transformer for transforming AC power, each of the transformers having a respective primary winding side and a respective secondary winding side, the transformers being star-delta transformers and having the same phase relationship between their respective primary and secondary winding sides; wherein the primary winding side of each of the first and second transformers comprises a first AC electrical connection, a second AC electrical connection and a third AC electrical connection, wherein the second AC electrical connection is spatially disposed between the first and third AC electrical connections in a first direction; wherein the secondary winding side of each of the first and second transformers comprises a fourth AC electrical connection, a fifth AC electrical connection and a sixth AC electrical connection, wherein the fifth AC electrical connection is spatially disposed between the fourth and sixth AC electrical connections in the first direction; the method comprising arranging the first transformer and second transformer such that, in the first direction, the third AC electrical connection of the first transformer is spatially adjacent the first AC electrical connection of the second transformer, and the sixth AC electrical connection of the first transformer is spatially adjacent the fourth AC electrical connection of the second transformer; the method further comprising: electrically connecting the first AC electrical connection of the first transformer and the second AC electrical connection of the second transformer to each other and to a first AC phase of a first AC network, the second AC electrical connection of the first transformer and third AC electrical connection of the second transformer to each other and to a second phase of the first AC network, and the third AC electrical connection of the first transformer and the first AC electrical connection of the second transformer to each other and to a third AC phase of a first AC network; and/or electrically connecting the fourth AC electrical connection of the first transformer and the fifth AC electrical connection of the second transformer to each other and to a first AC phase of a second AC network, the fifth AC electrical connection of the first transformer and the sixth AC electrical connection of the second transformer to each other and to a second AC phase of the second AC network, and the sixth AC electrical connection of the first transformer and the fourth AC electrical connection of the second transformer to each other and to a third AC phase of the second AC network.

It will be appreciated that particular features of different aspects share the technical effects and benefits of corresponding features of other aspects of the invention. More specifically the substation, power transmission network, and method share the technical effects and benefits of the electrical arrangement described herein.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

Embodiments of the invention will now be described by way of example only and with reference to the accompanying drawings, in which:
Figure 1 shows generically, an example of a power transmission network;
Figure 2 shows an example of a prior art electrical arrangement comprising first and second identical transformers;
Figure 3 shows an alternative example of a prior art electrical arrangement comprising first and second non-identical transformers;
Figure 4 shows an example of an electrical arrangement in accordance with aspects of the disclosure herein;
Figure 5 shows a further example of an electrical arrangement in accordance with aspects of the disclosure herein;
Figure 6 shows a further example of an electrical arrangement in accordance with aspects of the disclosure herein;
Figure 7 shows an example of a method in accordance with aspects of the disclosure herein; and
Figure 8 shows example results for a simulation of the electrical arrangement of Figure 5.

### Detailed description

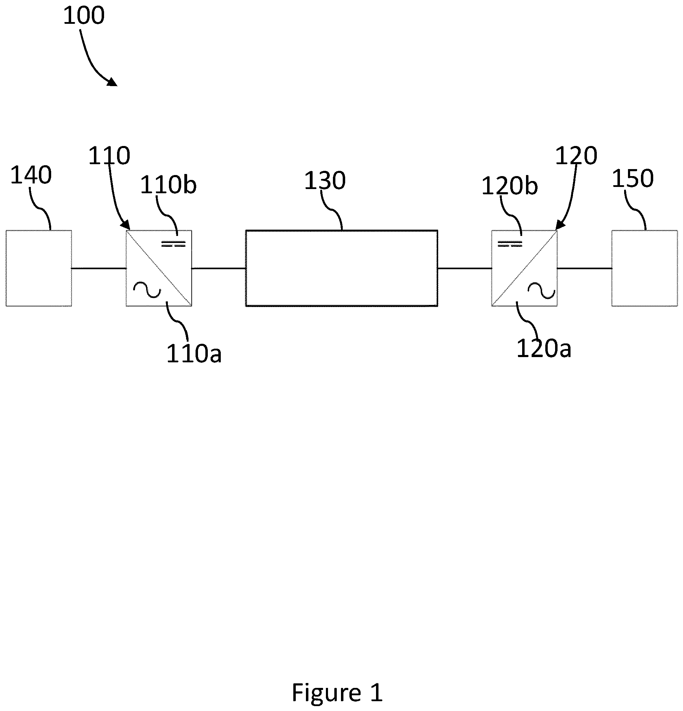

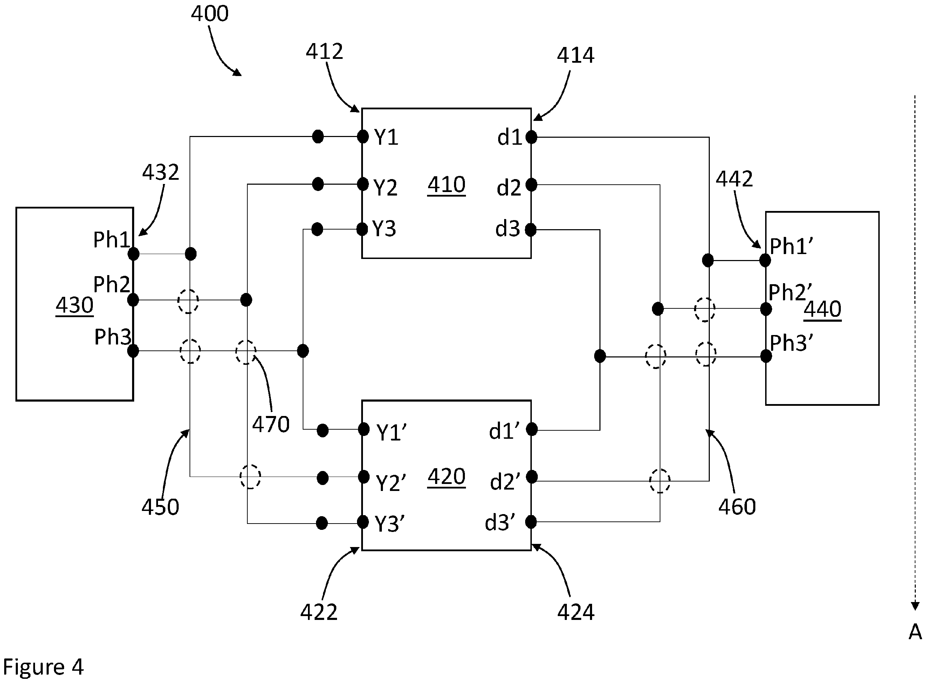

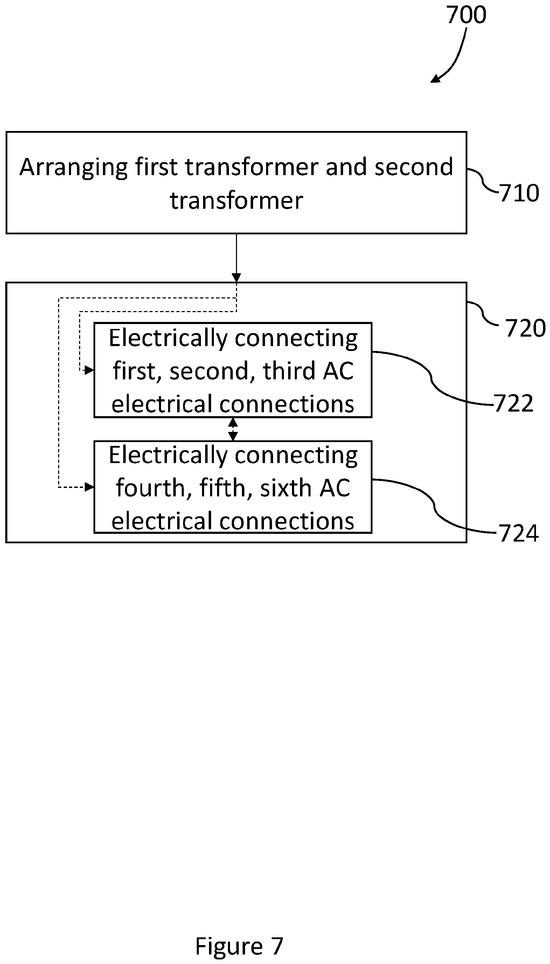

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting. It will therefore be understood that principles and features in the network 100 and herein discussed can be applied to networks comprising the electrical arrangements 400, 500, 600 of Figures 4, 5 and 6, for instance. Furthermore, the method 700 of Figure 7 may be performed in the network 100.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is connected to a first AC network 140. The first AC network 140 is connected to the first AC side 110a of the first power conversion means 110.

The second power conversion means 120 is connected to a second AC network 150. The second AC network 150 is connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance.

The electrical arrangements described herein comprising the parallel connected transformers may form part of the first AC network 140 or second AC network 150 or may be connected between the first AC network 140 and power conversion means 110, or between the second AC network 140 and power conversion means 120.

Also shown is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

The operation of the power transmission system 100 can be generically described as follows. The first AC power generation network 140 generates AC power that is provided to first power conversion means 110 (via the electrical arrangement described herein) at the first AC side 110a. The first power conversion means 110 converts the received AC power to a DC power for transmission to second power conversion means 120. The DC power is transmitted from the first DC side 110b over the power transmission medium 130 to the second DC side 120b of second power conversion means 120. The second power conversion means 120 converts the received DC power back to AC power. The AC power is then provided from the second AC side 120a (via the electrical arrangement described herein) to the second AC network 150 for consumption, for instance. In particular examples, the power conversion means 110 and 120 may be geographically remote. For instance, the first power conversion means 110 may reside with an off-shore wind farm and the second power conversion means 120 may reside on-shore.

The power transmission network 100 may further comprise a controller for controlling the operation of components of the power transmission network 100. Such a controller may control the power conversion means 110, 120, for instance. Such a controller may be referred to as a controller means or control means.

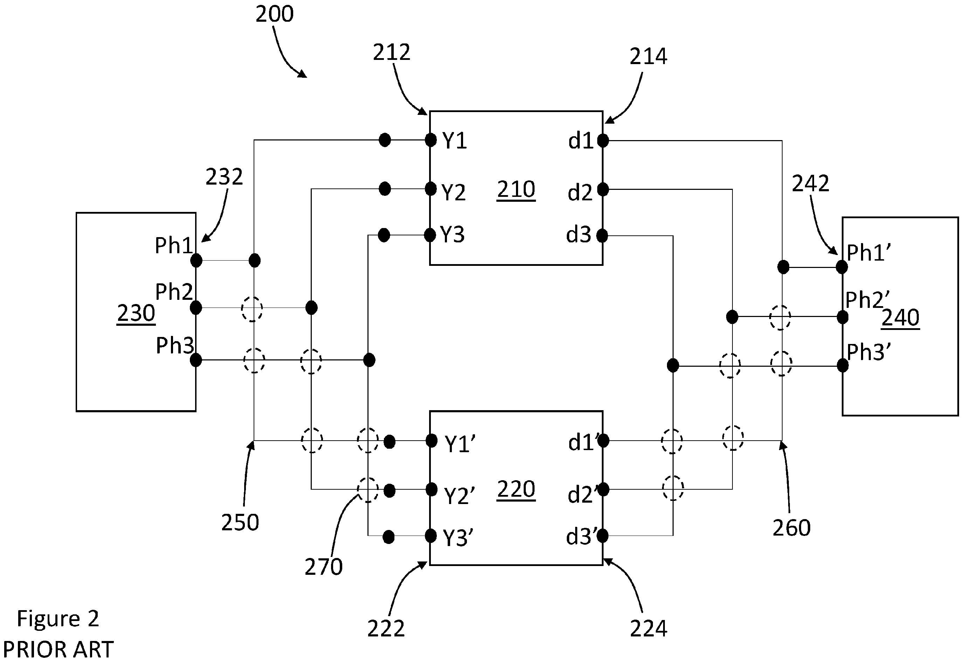

Figure 2 shows an example of a prior art electrical arrangement 200.

The electrical arrangement 200 comprises a first transformer 210 for transforming AC power. The first transformer 210 has a primary winding side 212 and a secondary winding side 214. The primary winding side 212 has a first electrical connection Y1, a second electrical connection Y2 and a third electrical connection Y3. The secondary winding side 214 has a fourth electrical connection d1, a fifth electrical connection d2 and a sixth electrical connection d3.

The electrical arrangement 200 also comprises a second transformer 220 for transforming AC power. The second transformer 220 comprises a primary winding side 222 and a secondary winding side 224. The primary winding side 222 has a first electrical connection Y1', a second electrical connection Y2' and a third electrical connection Y3'. The secondary winding side 224 has a fourth electrical connection d1', a fifth electrical connection d2' and a sixth electrical connection d3'.

The electrical arrangement 200 also shows a first AC network 230 providing three-phase AC power. The first phase is denoted Ph1, the second phase is denoted Ph2 and the third phase is denoted Ph3.

The electrical arrangement 200 also shows a second AC network 240 receiving three-phase AC power. The first phase is denoted Ph1', the second phase is denoted Ph2' and the third phase is denoted Ph3'.

Various bus bars 250 connect the primary winding sides 212, 222 in parallel to first AC network 230. Various bus bars 260 connect the secondary winding sides 214, 224 in parallel to second AC network 240.

In the electrical arrangement 200 the transformers 210 and 220 are identical star-delta transformers. More specifically, they have the same phase relationship between their primary winding sides 212, 222 and their secondary winding sides 214, 224. By way of example, the transformers 210 and 220 are both Yd11 star-delta transformers.

To connect the transformers 210 and 220 together in parallel a complex set of electrical connections are required as will now be described.

The first electrical connection Y1 of the first transformer 210 is connected in parallel with the first electrical connection Y1' of the second transformer 220 to first phase Ph1 of first AC network 230.

The second electrical connection Y2 of the first transformer 210 is connected in parallel with the second electrical connection Y2' of the second transformer 220 to second phase Ph2 of the first AC network 230.

The third electrical connection Y3 of the first transformer 210 is connected in parallel with the third electrical connection Y3' of the second transformer 220 to third phase Ph3 of the first AC network 230..

The fourth electrical connection d1 of the first transformer 210 is connected in parallel with the fourth electrical connection d1' of the second transformer 220 to first phase Ph1' of second AC network 240.

The fifth electrical connection d2 of the first transformer 210 is connected in parallel with the fifth electrical connection d2' of the second transformer 220 to second phase Ph2' of the second AC network 240.

The sixth electrical connection d3 of the first transformer 210 is connected in parallel with the sixth electrical connection d3' of the second transformer 220 to third phase Ph3' of the second AC network 240.

As can be seen in the electrical arrangement 200, a number of electrical crossovers 270 have resulted from the various electrical connections. These crossovers 270 tend to make the footprint and volume of the electrical arrangement 200 larger (i.e., the footprint and height of the busbars 250 tend to be larger owing to insulation/air gap requirements). Hence there is a requirement for more space, increased material costs, and more complex and higher risk maintenance (i.e., from staff having to work at increased height).

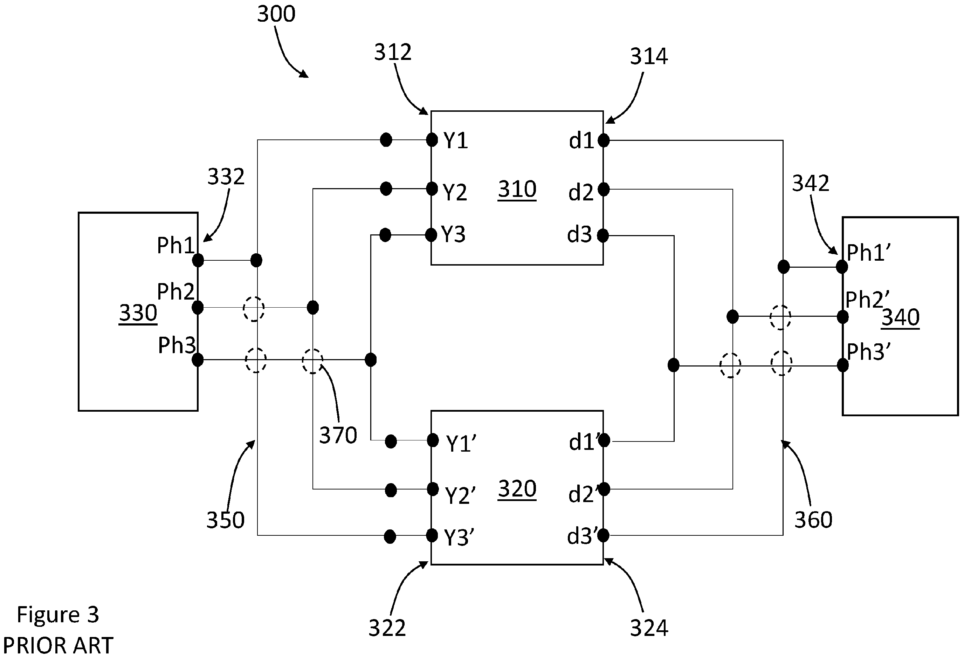

Figure 3 shows an alternative example of a prior art electrical arrangement 300.

The electrical arrangement 300 comprises a first transformer 310 for transforming AC power. The first transformer 310 has a primary winding side 312 and a secondary winding side 314. The primary winding side 312 has a first electrical connection Y1, a second electrical connection Y2 and a third electrical connection Y3. The secondary winding side 314 has a fourth electrical connection d1, a fifth electrical connection d2 and a sixth electrical connection d3.

The electrical arrangement 300 also comprises a second transformer 320 for transforming AC power. The second transformer 320 comprises a primary winding side 322 and a secondary winding side 324. The primary winding side 322 has a first electrical connection Y1', a second electrical connection Y2' and a third electrical connection Y3'. The secondary winding side 324 has a fourth electrical connection d1', a fifth electrical connection d2' and a sixth electrical connection d3'.

The electrical arrangement 300 also shows a first AC network 330 providing three-phase AC power. The first phase is denoted Ph1, the second phase is denoted Ph2 and the third phase is denoted Ph3.

The electrical arrangement 300 also shows a second AC network 340 receiving three-phase AC power. The first phase is denoted Ph1', the second phase is denoted Ph2' and the third phase is denoted Ph3'.

Various bus bars 350 connect the primary winding sides 312, 322 in parallel to first AC network 330. Various bus bars 360 connect the secondary winding sides 314, 324 in parallel to second AC network 340.

In the electrical arrangement 300 the transformers 310 and 320 are non-identical star-delta transformers. More specifically, they have a different phase relationship between their primary winding sides 312, 322 and their secondary winding sides 314, 324. By way of example, the first transformer 310 is a Yd11 star-delta transformer and the second transformer 320 is a Yd1 star-delta transformer.

To connect the transformers 310 and 320 together in parallel a less-complex set of electrical connections are required as will now be described.

The first electrical connection Y1 of the first transformer 310 is connected in parallel with the third electrical connection Y3' of the second transformer 320 to a first phase Ph1 of first AC network 330.

The second electrical connection Y2 of the first transformer 310 is connected in parallel with the second electrical connection Y2' of the second transformer 320 to a second phase Ph2 of the first AC network 330.

The third electrical connection Y3 of the first transformer 310 is connected in parallel with the first electrical connection Y1' of the second transformer 320 to a third phase Ph3 of the first AC network 330.

The fourth electrical connection d1 of the first transformer 310 is connected in parallel with the sixth electrical connection d3' of the second transformer 320 to a first phase Ph1' of second AC network 340.

The fifth electrical connection d2 of the first transformer 310 is connected in parallel with the fifth electrical connection d2' of the second transformer 320 to a second phase Ph2' of the second AC network 340.

The sixth electrical connection d3 of the first transformer 310 is connected in parallel with the fourth electrical connection d1' of the second transformer 320 to a third phase Ph3' of the second AC network 340.

In the electrical arrangement 300 the two transformer phase vectors are not the same (there is a 60degree phase shift) - one transformer is designed as Yd11 and other is designed as Yd1. Yd1 means the primary winding of the transformer is star connected and secondary is delta connected with 30 degree lagging. Yd11 means the primary winding is star connected and secondary winding is delta connected with 30 degree lead. It will be noted that the order of phase connection for the first transformer 310 can be written as Ph1, Ph2, Ph3 (or Ph1', Ph2', Ph3'). It will be noted that the order of phase connection for the second transformer 320 can be written as Ph3, Ph2, Ph1 (or Ph3', Ph2', Ph1'). The different transformer types and hence phase shift is needed in the electrical arrangement 300 because for a given transformer design, [Ph1, Ph2, Ph3] and [Ph3, Ph2, Ph1] in a star-delta transformer do not give the same phase vector relationship between AC input and AC output, but give a phase difference of 60 degrees, which is compensated by the different transformer designs.

Whilst the electrical arrangement 300 does offer a more optimized set of electrical connections (it is evident, for instance, that less crossovers 370 are present in Figure 3), the use of two different transformer designs is undesirable. Two different transformer designs can lead to increased design and manufacturing costs, increasing testing costs, a more complex and costly spares management strategy and increased burden in the production and maintenance of documentation and operating/maintenance manuals.

The solution described herein introduces an electrical arrangement and method for connecting two identical parallel transformers in such a way that the phase relationship of AC input and AC output is the same for the transformers, and the number of crossovers of the electrical connection arrangement is minimized.

Figure 4 shows an example of an electrical arrangement 400 in accordance with aspects of the disclosure herein.

The electrical arrangement 400 comprises a first transformer 410 for transforming AC power, the first transformer 410 electrically connected in parallel with an adjacent second transformer 420 for transforming AC power. Each of the transformers 410, 420 have a respective primary winding side 412, 422 and a respective secondary winding side 414, 424. The transformers 410, 420 are star-delta transformers and have the same phase relationship between their respective primary 412, 422 and secondary 414, 424 winding sides.

The primary winding side 412, 422 of each of the first and second transformers 410, 420 comprises a first AC electrical connection Y1, Y1', a second AC electrical connection Y2, Y2' and a third AC electrical connection Y3, Y3', wherein the second AC electrical connection Y2, Y2' is spatially disposed between the first Y1, Y1' and third Y3, Y3' AC electrical connections in a first direction 'A'.

The secondary winding side 414, 424 of each of the first and second transformers 410, 420 comprises a fourth AC electrical connection d1, d1', a fifth AC electrical connection d2, d2' and a sixth AC electrical connection d3, d3', wherein the fifth AC electrical connection d2, d2' is spatially disposed between the fourth d1, d1' and sixth d3, d3' AC electrical connections in the first direction `A'.

The first transformer 410 and second transformer 420 are arranged such that, in the first direction 'A', the third AC electrical connection Y3 of the first transformer 410 is spatially adjacent the first AC electrical connection Y1' of the second transformer 420, and the sixth AC electrical connection d3 of the first transformer 410 is spatially adjacent the fourth AC electrical connection d1' of the second transformer 420.

The first AC electrical connection Y1 of the first transformer 410 and the second AC electrical connection Y2' of the second transformer 420 are electrically connected to each other and are connected to a first AC phase Ph1 of a first AC network 430.

The second AC electrical connection Y2 of the first transformer 410 and third AC electrical connection Y3' of the second transformer 420 are electrically connected to each other and are connected to a second phase Ph2 of the first AC network 430.

The third AC electrical connection Y3 of the first transformer 410 and the first AC electrical connection Y1' of the second transformer 420 are electrically connected to each other and are connected to a third AC phase Ph3 of the first AC network 430.

The fourth AC electrical connection d1 of the first transformer 410 and the fifth AC electrical connection d2' of the second transformer 420 are electrically connected to each other and to a first AC phase Ph1' of a second AC network 440.

The fifth AC electrical connection d2 of the first transformer 410 and the sixth AC electrical connection d3' of the second transformer 420 are electrically connected to each other and to a second AC phase Ph2' of the second AC network 440.

The sixth AC electrical connection d3 of the first transformer 410 and the fourth AC electrical connection d1' of the second transformer 420 are electrically connected to each other and are connected to a third AC phase Ph3' of the second AC network 440.

Various bus bars 450 connect the primary winding sides 412, 422 in parallel to first AC network 330. Various bus bars 460 connect the secondary winding sides 414, 424 in parallel to second AC network 440.

In the electrical arrangement 400, at least one electrical connection connected to a common phase of the AC networks 430, 440 for each transformer 410, 420 are adjacent to each other. For example, the electrical connection of transformers 410, 420 that connect to the third phase Ph3, Ph3' of networks 430, 440 are next to each other, which results in less crossovers 470 compared to the arrangement 200 of Figure 2.

In the electrical arrangement 400, the order of the phase connections for the first transformer 410 is Ph1, Ph2, Ph3 (or Ph1', Ph2', Ph3'). The order of the phase connections for the second transformer 420 is Ph3, Ph1, Ph2 (or Ph3', Ph1', Ph2'). The order of Ph1, Ph2, Ph3 (or Ph1', Ph2', Ph3') is equivalent to Ph3, Ph1, Ph2 (or Ph3', Ph1', Ph2') in respect of phase-relationship and so the transformer design can be maintained common between the transformers 410, 420 even though their ordering of connections is different. The person skilled in the art would be familiar with the different nomenclature for phases of a three-phase supply. For instance, an example within the scope of the present disclosure includes Ph1/Ph1' being phase 'A', Ph2/Ph2' being phase 'B'; and Ph3/Ph3' being phase 'C'. A further example includes Ph1/Ph1' being phase 'C', Ph2/Ph2' being phase 'A'; and Ph3/Ph3' being phase 'B'. A further example includes Ph1/Ph1' being phase 'B', Ph2/Ph2' being phase 'C'; and Ph3/Ph3' being phase 'A'.

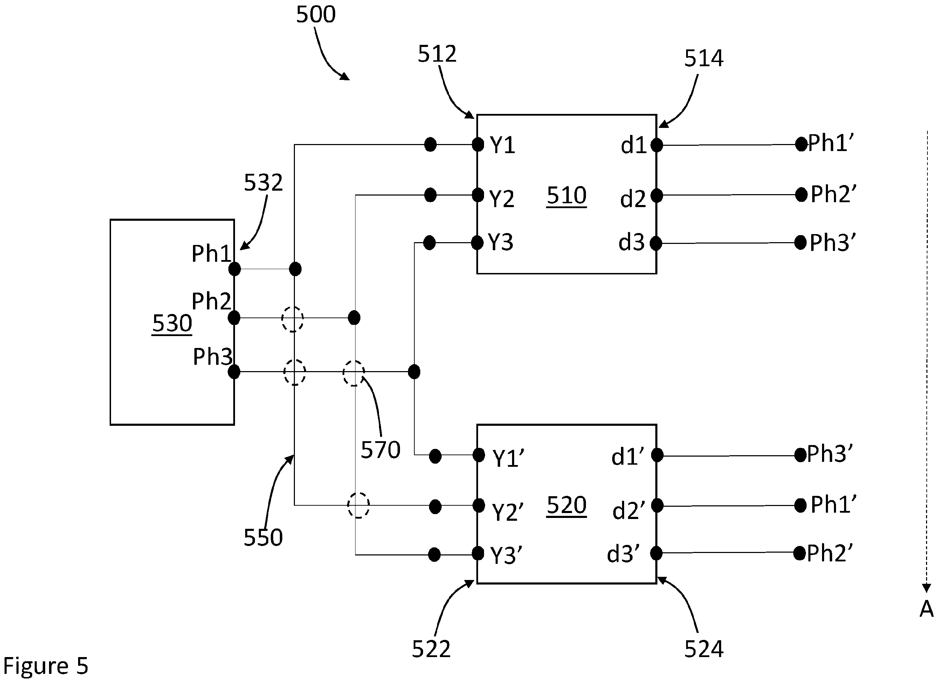

Figure 5 shows a further example of an electrical arrangement 500 in accordance with aspects of the disclosure herein.

The electrical arrangement 500 comprises a first transformer 510 for transforming AC power, the first transformer 510 electrically connected in parallel with an adjacent second transformer 520 for transforming AC power. Each of the transformers 510, 520 have a respective primary winding side 512, 522 and a respective secondary winding side 514, 524. The transformers 510, 520 are star-delta transformers and having the same phase relationship between their respective primary 512, 522 and secondary 514, 524 winding sides.

The primary winding side 512, 522 of each of the first and second transformers 510, 520 comprises a first AC electrical connection Y1, Y1', a second AC electrical connection Y2, Y2' and a third AC electrical connection Y3, Y3', wherein the second AC electrical connection Y2, Y2' is spatially disposed between the first Y1, Y1' and third Y3, Y3' AC electrical connections in a first direction 'A'.

The secondary winding side 514, 524 of each of the first and second transformers 510, 520 comprises a fourth AC electrical connection d1, d1', a fifth AC electrical connection d2, d2' and a sixth AC electrical connection d3, d3', wherein the fifth AC electrical connection d2, d2' is spatially disposed between the fourth d1, d1' and sixth d3, d3' AC electrical connections in the first direction A.

The first transformer 510 and second transformer 520 are arranged such that, in the first direction 'A', the third AC electrical connection Y3 of the first transformer 510 is spatially adjacent the first AC electrical connection Y1' of the second transformer 520, and the sixth AC electrical connection d3 of the first transformer 510 is spatially adjacent the fourth AC electrical connection d1' of the second transformer 520.

The first AC electrical connection Y1 of the first transformer 510 and the second AC electrical connection Y2' of the second transformer 520 are electrically connected to each other and are connected to a first AC phase Ph1 of a first AC network 530.

The second AC electrical connection Y2 of the first transformer 510 and third AC electrical connection Y3' of the second transformer 520 are electrically connected to each other and are connected to a second phase Ph2 of the first AC network 530.

The third AC electrical connection Y3 of the first transformer 510 and the first AC electrical connection Y1' of the second transformer 520 are electrically connected to each other and are connected to a third AC phase Ph3 of the first AC network 530.

In the electrical arrangement 500, the fourth AC electrical connections d1, d1', the fifth AC electrical connections d2, d2', and the sixth AC electrical connections d3, d3' are not connected in parallel. Each set of connections d1, d2, d3 and d1', d2', d3' may be connected to separate AC networks. However, the set of connections d1, d2, d3 when connected to an AC network would maintain the order of phases from primary winding side 512 when connected to an AC network (i.e., Ph1', Ph2', Ph3' as shown in the Figure). Furthermore the set of connections d1', d2', d3' when connected to an AC network would maintain the order of phases from primary winding side 522 when connected to an AC network (i.e., Ph3', Ph1', Ph2' as shown in the Figure).

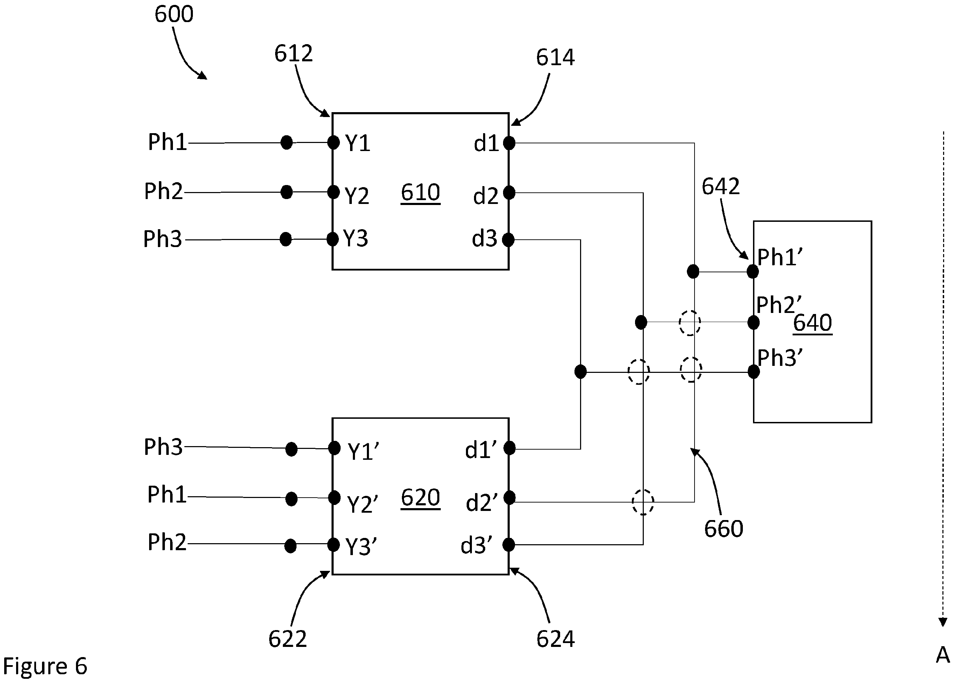

Figure 6 shows a further example of an electrical arrangement 600 in accordance with aspects of the disclosure herein.

The electrical arrangement 600 comprises a first transformer 610 for transforming AC power, the first transformer 610 electrically connected in parallel with an adjacent second transformer 620 for transforming AC power. Each of the transformers 610, 620 have a respective primary winding side 612, 622 and a respective secondary winding side 614, 624. The transformers 610, 620 are star-delta transformers and have the same phase relationship between their respective primary 612, 622 and secondary 614, 624 winding sides.

The primary winding side 612, 622 of each of the first and second transformers 610, 620 comprises a first AC electrical connection Y1, Y1', a second AC electrical connection Y2, Y2' and a third AC electrical connection Y3, Y3', wherein the second AC electrical connection Y2, Y2' is spatially disposed between the first Y1, Y1' and third Y3, Y3' AC electrical connections in a first direction 'A'.

The secondary winding side 614, 624 of each of the first and second transformers 610, 620 comprises a fourth AC electrical connection d1, d1', a fifth AC electrical connection d2, d2' and a sixth AC electrical connection d3, d3', wherein the fifth AC electrical connection d2, d2' is spatially disposed between the fourth d1, d1' and sixth d3, d3' AC electrical connections in the first direction A.

The first transformer 610 and second transformer 620 are arranged such that, in the first direction 'A', the third AC electrical connection Y3 of the first transformer 610 is spatially adjacent the first AC electrical connection Y1' of the second transformer 620, and the sixth AC electrical connection d3 of the first transformer 610 is spatially adjacent the fourth AC electrical connection d1' of the second transformer 620.

The fourth AC electrical connection d1 of the first transformer 610 and the fifth AC electrical connection d2' of the second transformer 620 are electrically connected to each other and to a first AC phase Ph1' of a second AC network 640.

The fifth AC electrical connection d2 of the first transformer 610 and the sixth AC electrical connection d3' of the second transformer 620 are electrically connected to each other and to a second AC phase Ph2' of the second AC network 640.

The sixth AC electrical connection d3 of the first transformer 610 and the fourth AC electrical connection d1' of the second transformer 620 are electrically connected to each other and are connected to a third AC phase Ph3' of the second AC network 640.

Various bus bars 660 connect the secondary winding sides 614, 624 in parallel to second AC network 640.

In the electrical arrangement 600, the first AC electrical connections Y1, Y1', the second AC electrical connections Y2, Y2', and the third AC electrical connections Y3, Y3' are not connected in parallel. Each set of connections Y1, Y2, Y3 and Y1', Y2', Y3' may be connected to separate AC networks. However, the set of connections Y1, Y2, Y3 when connected to an AC network would maintain the order of phases from secondary winding side 614 when connected to an AC network (i.e., Ph1, Ph2, Ph3 as shown in the Figure). Furthermore the set of connections Y1', Y2', Y3' when connected to an AC network would maintain the order of phases from secondary winding side 624 when connected to an AC network (i.e., Ph3, Ph1, Ph2 as shown in the Figure).

The second AC network 640 comprises a power converter. When the electrical configuration 600 is in-use the transformers 610, 620 receive AC power from, for instance, separate offshore AC networks. The transformers 610, 620 transform the respective AC power and provide the transformed AC power to power converter 640 for conversion from AC to DC for onward power transmission.

Figure 7 shows an example of a method 700 in accordance with aspects of the disclosure herein. More specifically the method 700 is a method of electrically connecting a first transformer for transforming AC power in parallel with an adjacent second transformer for transforming AC power, each of the transformers having a respective primary winding side and a respective secondary winding side, the transformers being star-delta transformers and having the same phase relationship between their respective primary and secondary winding sides; wherein the primary winding side of each of the first and second transformers comprises a first AC electrical connection, a second AC electrical connection and a third AC electrical connection, wherein the second AC electrical connection is spatially disposed between the first and third AC electrical connections in a first direction; wherein the secondary winding side of each of the first and second transformers comprises a fourth AC electrical connection, a fifth AC electrical connection and a sixth AC electrical connection, wherein the fifth AC electrical connection is spatially disposed between the fourth and sixth AC electrical connections in the first direction.

A first step 710 comprises, arranging the first transformer and second transformer such that, in the first direction, the third AC electrical connection of the first transformer is spatially adjacent the first AC electrical connection of the second transformer, and the sixth AC electrical connection of the first transformer is spatially adjacent the fourth AC electrical connection of the second transformer.

A further step 720 comprises step 722 and/or step 724. The step 722 comprises electrically connecting the first AC electrical connection of the first transformer and the second AC electrical connection of the second transformer to each other and to a first AC phase of a first AC network, the second AC electrical connection of the first transformer and third AC electrical connection of the second transformer to each other and to a second phase of the first AC network, and the third AC electrical connection of the first transformer and the first AC electrical connection of the second transformer to each other and to a third AC phase of a first AC network.

Alternatively or in addition to the step 722, the method comprises the step 724. The step 724 comprises electrically connecting the fourth AC electrical connection of the first transformer and the fifth AC electrical connection of the second transformer to each other and to a first AC phase of a second AC network, the fifth AC electrical connection of the first transformer and the sixth AC electrical connection of the second transformer to each other and to a second AC phase of the second AC network, and the sixth AC electrical connection of the first transformer and the fourth AC electrical connection of the second transformer to each other and to a third AC phase of the second AC network.

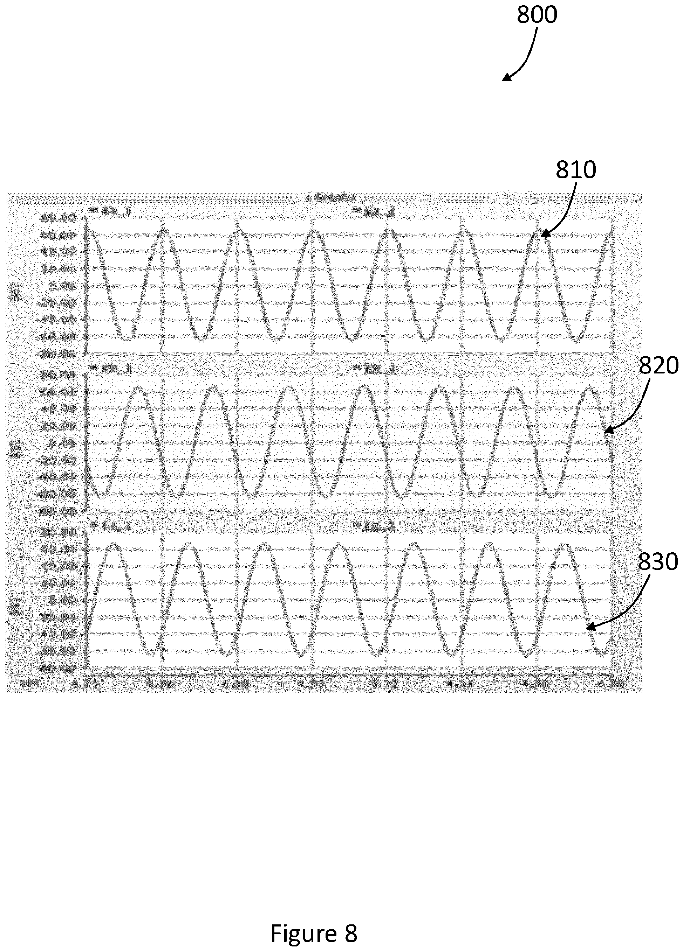

Figure 8 shows example results 800 for a simulation of the electrical arrangement 500 of Figure 5.

The first graph 810 shows overlapping voltage values (measured in kV) against time for voltages output from fourth AC connection d1 of first transformer 510 and fifth AC connection d2' of second transformer 520.

The second graph 820 shows overlapping voltage values (measured in kV) against time for voltages output from fifth AC connection d2 of first transformer 510 and sixth AC connection d3' of second transformer 520.

The second graph 830 shows overlapping voltage values (measured in kV) against time for voltages output from sixth AC connection d3 of first transformer 510 and first AC connection d1' of second transformer 520.

The results 810, 820, 830 show that this connection arrangement 500 provides the same phase relationship for both transformers 510, 520 between primary 512, 522 and secondary 514, 524 AC connections.

Whilst the examples described herein may indicate particular star-delta transformer types such as Yd1 or Yd11, this is not intended to be limiting. Any other star-delta transformer types can be used and would be familiar to one skilled in the art. However, the first and second transformers must be of the same type i.e., both must be Yd1 or Yd11, for instance.

The electrical arrangements described herein may have first and second transformers parallel connected on their primary winding side, secondary winding side, or both.

The electrical arrangements described herein, whilst in the context of power transmission networks, may not be limited in application to HVDC power transmission networks. Indeed such electrical arrangements can be deployed wherever parallel connected transformers are required.

The invention described herein tends to have the advantage of allowing the same design of the first and second transformers.

The invention described herein tends to have the advantage of a simpler connection arrangement.

The invention described herein tends to have the advantage of a reduced number of electrical crossovers (in some examples only a single crossover).

The invention described herein tends to have the advantage of electrical connections of the first transformer that are physically adjacent electrical connections of the second transformer, connected together.

The invention described herein tends to have the advantage of requiring less bus work/busbars/insulators.

The invention described herein tends to have the advantage of being easier and safer to maintain (i.e., less working at height).

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein provides a parallel star-delta transformer arrangement comprising of two identical star-delta transformers, each with primary transformer windings connected to a three phase AC input and secondary transformer windings connected to a three phase AC output, wherein the phase sequence of the primary and the secondary winding connections is configured such that the two transformer winding connections physically adjacent are connected to the same phase of the AC input and the AC output. The phase sequence of the primary and secondary windings for a transformer has the same phase vector relationship (i.e., ABC or BCA or CAB).

## Claims

1. An electrical arrangement for a power transmission network, comprising:
a first transformer for transforming AC power, the first transformer electrically connected in parallel with an adjacent second transformer for transforming AC power, each of the transformers having a respective primary winding side and a respective secondary winding side, the transformers being star-delta transformers and having the same phase relationship between their respective primary and secondary winding sides;
wherein the primary winding side of each of the first and second transformers comprises a first AC electrical connection, a second AC electrical connection and a third AC electrical connection, wherein the second AC electrical connection is spatially disposed between the first and third AC electrical connections in a first direction;
wherein the secondary winding side of each of the first and second transformers comprises a fourth AC electrical connection, a fifth AC electrical connection and a sixth AC electrical connection, wherein the fifth AC electrical connection is spatially disposed between the fourth and sixth AC electrical connections in the first direction;
wherein the first transformer and second transformer are arranged such that, in the first direction, the third AC electrical connection of the first transformer is spatially adjacent the first AC electrical connection of the second transformer, and the sixth AC electrical connection of the first transformer is spatially adjacent the fourth AC electrical connection of the second transformer;
wherein:
the first AC electrical connection of the first transformer and the second AC electrical connection of the second transformer are electrically connected to each other and are for connection to a first AC phase of a first AC network, the second AC electrical connection of the first transformer and third AC electrical connection of the second transformer are electrically connected to each other and are for connection to a second phase of the first AC network, and the third AC electrical connection of the first transformer and the first AC electrical connection of the second transformer are electrically connected to each other and are for connection to a third AC phase of a first AC network; and/or
the fourth AC electrical connection of the first transformer and the fifth AC electrical connection of the second transformer are electrically connected to each other and are for connection to a first AC phase of a second AC network, the fifth AC electrical connection of the first transformer and the sixth AC electrical connection of the second transformer are electrically connected to each other and are for connection to a second AC phase of the second AC network, and the sixth AC electrical connection of the first transformer and the fourth AC electrical connection of the second transformer are electrically connected to each other and are for connection to a third AC phase of the second AC network.

2. The electrical arrangement of claim 1, wherein:
the first AC electrical connection of the first transformer and the second AC electrical connection of the second transformer are electrically connected to each other and to the first AC phase of the first AC network, the second AC electrical connection of the first transformer and third AC electrical connection of the second transformer are electrically connected to each other and to the second phase of the first AC network, and the third AC electrical connection of the first transformer and the first AC electrical connection of the second transformer are electrically connected to each other and to the third AC phase of a first AC network.

3. The electrical arrangement of any one of claims 1-2, wherein:
the fourth AC electrical connection of the first transformer and the fifth AC electrical connection of the second transformer are electrically connected to each other and to the first AC phase of the second AC network, the fifth AC electrical connection of the first transformer and the sixth AC electrical connection of the second transformer are electrically connected to each other and to the second AC phase of the second AC network, and the sixth AC electrical connection of the first transformer and the fourth AC electrical connection of the second transformer are electrically connected to each other and to the third AC phase of the second AC network.

4. The electrical arrangement of claim 3 when dependent on claim 1, wherein:
the first, second, and third AC electrical connections of the first transformer are electrically connected to first, second and third phases of a third AC network;
the first, second and third AC electrical connections of the second transformer are electrically connected to third, first and second phases of a fourth AC network.

5. The electrical arrangement of claim 4, wherein:
the third AC network comprises an offshore or onshore AC network; and
the fourth AC network comprises an offshore or onshore AC network.

6. The electrical arrangement of any preceding claim, wherein:
the first AC network comprises an offshore or onshore AC network.

7. The electrical arrangement of any preceding claim, wherein:
the second AC network comprises a power converter.

8. A substation, comprising the electrical arrangement of any preceding claim, wherein the substation is an air-insulated substation, AIS, or a gas-insulated substation, GIS.

9. A power transmission network comprising the electrical arrangement of any one of claims 1-7.

10. The power transmission network of claim 9, wherein the power transmission network is a high voltage direct current, HVDC, power transmission network.

11. The power transmission network of claim 10, wherein the HVDC power transmission network is configured to operate at a DC voltage greater than or equal to 500kV.

12. A method of electrically connecting a first transformer for transforming AC power in parallel with an adjacent second transformer for transforming AC power, each of the transformers having a respective primary winding side and a respective secondary winding side, the transformers being star-delta transformers and having the same phase relationship between their respective primary and secondary winding sides;
wherein the primary winding side of each of the first and second transformers comprises a first AC electrical connection, a second AC electrical connection and a third AC electrical connection, wherein the second AC electrical connection is spatially disposed between the first and third AC electrical connections in a first direction;
wherein the secondary winding side of each of the first and second transformers comprises a fourth AC electrical connection, a fifth AC electrical connection and a sixth AC electrical connection, wherein the fifth AC electrical connection is spatially disposed between the fourth and sixth AC electrical connections in the first direction;
the method comprising arranging the first and second transformers such that, in the first direction, the third AC electrical connection of the first transformer is spatially adjacent the first AC electrical connection of the second transformer, and the sixth AC electrical connection of the first transformer is spatially adjacent the fourth AC electrical connection of the second transformer;
wherein the method further comprises:
electrically connecting the first AC electrical connection of the first transformer and the second AC electrical connection of the second transformer to each other and to a first AC phase of a first AC network, the second AC electrical connection of the first transformer and third AC electrical connection of the second transformer to each other and to a second phase of the first AC network, and the third AC electrical connection of the first transformer and the first AC electrical connection of the second transformer to each other and to a third AC phase of a first AC network; and/or
electrically connecting the fourth AC electrical connection of the first transformer and the fifth AC electrical connection of the second transformer to each other and to a first AC phase of a second AC network, the fifth AC electrical connection of the first transformer and the sixth AC electrical connection of the second transformer to each other and to a second AC phase of the second AC network, and the sixth AC electrical connection of the first transformer and the fourth AC electrical connection of the second transformer to each other and to a third AC phase of the second AC network.
